# EUROPÄISCHE PATENTSCHRIFT

(11) **EP 0 331 001 B1**
(45) Veröffentlichungstag und Bekanntmachung des Hinweises auf die Patenterteilung: **08.09.1993**
(21) Anmeldenummer: 89103149.4
(22) Anmeldetag: 23.02.1989
(51) Int. Cl.: C08L 77/00, C08K 9/08

(54) **Thermoplastische Formmassen auf der Basis von Polyamiden**
Thermoplastic mouldings based on polyamide
Masses à mouler thermoplastiques à base de polyamides

(30) Priorität: 27.02.1988 DE 3806271
(43) Veröffentlichungstag der Anmeldung: 06.09.1989
(73) Patentinhaber: BASF Aktiengesellschaft, 67063 Ludwigshafen (DE)
(72) Erfinder: Betz, Walter, Dr., D-6700 Ludwigshafen (DE); Plachetta, Christoph, Dr., D-6703 Limburgerhof (DE); Koch, Eckhard Michael, Dr., D-6701 Fussgoenheim (DE); Blinne, Gerd, Dr., D-6719 Bobenheim (DE); Pipper, Gunter, D-6702 Bad Duerkheim (DE)

(56) Entgegenhaltungen:
- EP-A- 0 044 141
- JP-A-53 140 350
- US-A- 4 415 699
- PATENT ABSTRACTS OF JAPAN, Band 9, Nr. 254 (C-308)[1977], 11. Oktober 1985; & JP-A-60 106 854

## Beschreibung

Die vorliegende Erfindung betrifft thermoplastische Formmassen, bestehend aus
A) bis zu 99 Gew.-% eines thermoplastischen Polyamids,
B) 1 bis 2 Gew.-% eines thermoplastischen Polyester-Elastomeren,
C) 0 bis 50 Gew.-% faser- oder teilchenförmigen Füllstoffen oder deren Mischungen, Stabilisatoren, Oxidationsverzögerer, Mittel gegen Wärmezersetzung und Zersetzung durch ultraviolettes Licht, Gleit- und Entformungsmittel, Färbemittel, Keimbildungsmittel, Weichmacher und Flammschutzmittel.

Darüber hinaus betrifft die Erfindung die Verwendung derartiger Formmassen zur Herstellung von Formkörpern und Formkörper, die unter Verwendung von derartigen Formmassen als wesentliche Komponenten erhältlich sind.

In wasserfreiem Zustand sind besonders die aus hochkristallinen Polyamiden mit mittlerem Molekulargewicht hergestellten Formkörper relativ empfindlich gegen Schlagbeanspruchung. Es besteht daher ein Bedarf nach rasch verarbeitbaren, leicht fließenden Polyamidkunststoffen, aus denen sich insbesondere Formkörper herstellen lassen, die in trockenem Zustand eine erhöhte Schlagzähigkeit aufweisen. Besonders sind solche Polyamide von Interesse, die gleichzeitig eine hohe Zugfestigkeit, eine hohe Wärmestandfestigkeit, eine gute Lösungsmittelbeständigkeit, eine leichte Verarbeitbarkeit und eine hohe Schlagzähigkeit und eine gute Flexibilität aufweisen.

Zur Verbesserung der Schlagzähigkeit und Flexibilität von Polyamiden ist es bekannt, niedermolekulare Weichmacher in Polyamide einzumischen. Dies führt aber nicht zu zufriedenstellenden Lösungen. Der größte Teil der für Kunststoffe geeigneten Weichmacher ist mit Polyamiden nicht ausreichend verträglich und entmischt sich beim Verarbeiten, oder die Weichmacher neigen zum Ausschwitzen aus dem Kunststoff. Weichmacher, die mit Polyamiden echte Lösungen bilden, haben meist negative Auswirkungen auf die mechanischen Eigenschaften der Polyamide. Stark polare Stoffe mit niedrigem Molekulargewicht wie Wasser oder Dimethylformamid bewirken zwar eine gute Weichmachung, können jedoch erst nach der Herstellung der Formkörper in diese eingearbeitet werden, weil sonst bei der Verarbeitung des vorbehandelten Polyamidgranulats wegen der relativ niedrigen Siedepunkte dieser Weichmacher blasenhaltige Formkörper entstehen würden. Außerdem entweichen derartige Weichmacher wegen ihres hohen Dampfdrucks wieder aus dem behandelten Polyamidformkörper.

Aus der JP-A 53/140 530 sind Polyamidformassen bekannt, welche Polyesterelastomere als Schlagzähmodifier enthalten.

Den aus dem Stand der Technik bekannten Mischungen haftet häufig auch das Problem an, daß durch den Zusatz signifikanter Mengen (>10 Gew.%) schlagzäh-modifizierender Polymerer der Elastizitätsmodul (d.h. die Steifigkeit) beeinträchtigt wird.

Der vorliegenden Erfindung lag daher die Aufgabe zugrunde, thermoplastische Formmassen zur Verfügung zu stellen, die ein gutes Gesamtspektrum der mechanischen Eigenschaften und insbesondere eine gute Reproduzierbarkeit der Schlagzähigkeitseigenschaften auch bei tiefen Temperaturen, insbesondere bei Messungen an aus den Formmassen hergestellten Formkörpern zeigen. Darüber hinaus sollte die Steifigkeit und die Fließfähigkeit möglichst nicht beeinträchtigt werden.

Diese Aufgabe wird erfindungsgemäß durch die eingangs definierten thermoplastischen Formmassen gelöst.

Bevorzugte Massen dieser Art sind dem Unteranspruch 2 zu entnehmen.

Die als Komponente A) in den Massen enthaltende Polyamide sind an sich bekannt und umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem Diamin, welches bis 14 Kohlenstoffatome aufweist, hergestellt werden, oder durch Kondensation von ω-Aminocarbonsäuren oder Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und ein Polyamid aus Di(p-aminocyclohexyl)-methan und Dodecandisäure. Es ist auch möglich, gemäß der Erfindung Polyamide zu verwenden, die durch Copolykondensation von zwei oder mehr der obengenannten Polymeren oder ihrer Komponenten hergestellt worden sind, z.B. ein Copolymeres aus Adipinsäure, Isophthalsäure oder Terephthalsäure und Hexamethylendiamin oder Copolymere aus Caprolactam, Terephthalsäure und Hexamethylendiamin. Vorzugsweise sind die Polyamide linear und haben Schmelzpunkte von mehr als 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 gew.%igen Lösung in 96 %iger Schwefelsäure bei 23°C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Der Anteil der Polyamide A) an den erfindungsgemäßen Formmassen beträgt bis zu 99 und vorzugsweise 60 bis 98 Gew.-%.

Als Komponente B enthalten die erfindungsgemäßen thermoplastischen Formmassen 1 bis 2, Gew.%, bezogen auf das Gesamtgewicht der Formmassen, eines thermoplastischen Polyester-Elastomeren.

Unter Polyester-Elastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten.

Derartige Produkte sind an sich bekannt und in der Literatur beschrieben. Nur beispielsweise sei hier auf die US-Patente 3 651 014, 3 784 520, 4 185 003 und 4 136 090, sowie auf einige Veröffentlichungen von G.K. Hoeschele (Chimia 28, (9), 544 (1974); Angew. Makromolek. Chemie 58/59, 299 - 319 (1977) und Pol. Eng. Sci. 1974, 848) verwiesen. Auch im Handel sind entsprechende Produkte unter den Bezeichnungen Hytrel® (DuPont), Arnitel® (Akzo) sowie Pelprene® (Toyobo Co. Ltd.) erhältlich.

Ganz allgemein setzen sich thermoplastische Copolyetherester-Elastomere aus langkettigen Segmenten der allgemeinen Formel 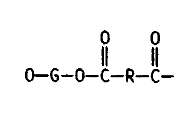
und kurzkettigen Segmenten der allgemeinen Formel 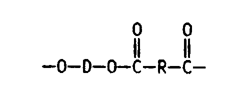
zusammen,
wobei
- G: einen zweiwertigen Rest, der nach der Entfernung der terminalen Hydroxylgruppen aus einem Poly(alkylenoxid)glykol mit einem Molekulargewicht von vorzugsweise 400 bis 6000, insbesondere 600 bis 4000 entsteht,
- D: einen zweiwertigen Rest, der nach Entfernung der terminalen Hydroxylgruppen aus einem niedermolekularen Diol mit einem Molekulargewicht von vorzugsweise weniger als 250 entsteht, und
- R: einen zweiwertigen Rest, der nach Entfernung der Carboxylgruppen aus einer Dicarbonsäure mit einem Molekulargewicht von vorzugsweise weniger als 300 entsteht,
darstellen.

Es versteht sich, daß auch Mischungen von mehreren Poly(alkylenoxid)glykolen, mehreren Diolen oder mehreren Dicarbonsäuren eingesetzt werden können.

Die Poly(alklyenoxid)glykole HO-G-OH haben vorzugsweise einen Schmelzpunkt von weniger als 55°C und ein Kohlenstoff/Sauerstoff-Molverhältnis von vorzugsweise 2 bis 10, insbesondere 2 bis 6.

Beispiele für Poly(alkylenoxid)glykole sind Poly(ethylenoxid)glykol Poly(1,2-propylenoxid)glykol, Poly(1,3-propylenoxid)glykol, Poly(1,2-butylenoxid)glykol, Poly(1,3-butylenoxid)glykol, Poly(1,4-butylenoxid)glykol, Poly(pentamethylenoxid)glykol, Poly(hexamethylenoxid)glykol, Poly(heptamethylenoxid)glykol, Poly(octamethylenoxid)glykol, Poly(nonamethylenoxid)glykol sowie statistische oder Blockcopolymere aus verschiedenen der vorstehend genannten Glykole. Bevorzugt werden Poly(ethylenoxid)glykol, Poly(1,2-propylenoxid)glykol, Poly(1,3-propylenoxid)glykol und Poly(1,4-butylenoxid)glykol sowie deren Mischungen. Der Gewichtsanteil der langkettigen Segmente, die sich von den vorstehenden Polyalkylenoxidglykolen und Dicarbonsäuren ableiten, liegt im allgemeinen im Bereich von 5 bis 70 Gew.%, vorzugsweise von 7 bis 50 Gew.%, bezogen auf das Gesamtgewicht der Komponente B.

Als Diole HO-D-OH kommen ganz allgemein niedermolekulare Diole mit Molekulargewichten von vorzugsweise weniger als 250 in Betracht. Diese können lineare oder verzweigte, cycloaliphatische oder aromatische Grundstrukturen aufweisen.

Diole mit 2 bis 15 C-Atomen werden bevorzugt. Beispielhaft seien hier nur 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere, Decamethylendiol, die isomeren Dihydroxycyclohexane, Resorcin, Hydrochinon und die verschiedenen Dihydroxynaphthaline genannt. Von diesen werden besonders aliphatische Diole mit 2 bis 8, insbesondere 2 bis 4 C-Atomen bevorzugt (1,2-Ethandiol, 1,3-Propandiol, 1,4-Butandiol).

Auch ungesättigte Diole haben sich in einigen Fällen als geeignet herausgestellt, z.B. But-2-en-1,4-diol, insbesondere in Mischung mit den vorstehend genannten gesättigten Diolen. Beispiele für Polyetherester aus derartigen Mischungen sind der EP-A 49 823 zu entnehmen.

Schließlich sind als Diole auch noch Diphenole wie 4,4-Dihydroxydiphenyl, Di-(4-hydroxyphenyl)methan und 2,2-Di-(4-hydroxyphenyl)propan (häufig als Bisphenol A bezeichnet) zu nennen.

Selbstverständlich können anstelle der Diole auch deren esterbildende Derivate eingesetzt werden; in diesem Fällen kann das Molekulargewicht natürlich je nach Art des Derivats auch mehr als 250 betragen, da der bevorzugte Molekulargewichtsbereich (MG < 250) sich auf die Diole selbst bezieht.

Die Dicarbonsäuren HOOC-R-COOH haben vorzugsweise Molekulargewichte von weniger als 300 und können aromatisch, aliphatisch oder cycloaliphatisch sein. Die Dicarbonsäuren können auch Substituenten aufweisen, die im Verlauf der Polymerisationsreaktion nicht stören.

Als Beispiele für aromatische Dicarbonsäuren seien Terephthalsäure, Isophthalsäure, substituierte Dicarbonsäuren der allgemeinen Formel 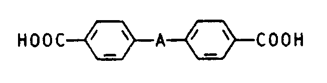
wobei A eine chem. Bindung, eine Alkylengruppe mit 1 bis 3- C-Atomen, -CO-, -S- oder -SO₂- ist, 1,5-, 2,6- und 2,7-Naphthalindicarbonsäure und deren C₁-C₆-alkylsubstituierten Derivate genannt. Von diesen werden Terephthalsäure, Isophthalsäure, deren Mischungen oder Mischungen aus Tere- oder Isophthalsäure mit anderen Dicarbonsäuren bevorzugt.

Aliphatische Dicarbonsäuren, die eingesetzt werden können sind beipsielsweise Oxalsäure, Fumarsäure, Maleinsäure, Citraconsäure, Sebacinsäure, Adipinsäure, Glutarsäure, Succinsäure, Azelainsäure, um nur einige zu nennen.

Es versteht sich, daß auch Mischungen verschiedener aliphat. Dicarbonsäuren eingesetzt werden können. Wie im Fall der Diole können anstelle der Säuren selbst auch deren esterbildende Derivate eingesetzt werden. Dies hat sich in einigen Fällen auch als besonders vorteilhaft herausgestellt.

Wegen weiterer langkettiger Glykole HO-G-OH, kurzkettiger Diole HO-D-OH und Dicarbonsäuren HOOC-R-COOH sei auf die US-A 3 651 014 verwiesen.

Wie bereits vorstehend erwähnt, beträgt der Anteil der langkettigen Segmente im allgemeinen 5 bis 70 Gew.%, vorzugsweise 7 bis 50 Gew.% und der Anteil der kurzkettigen Segmente entsprechend 30 bis 95 Gew.%, vorzugsweise 50 bis 93 Gew.%. Der Gewichtsanteil der jew. Segmente beeinflußt unter anderem die Härte der Produkte.

Die Dicarbonsäuren in der langkettigen und kurzkettigen Segmenten können dabei gleich oder verschieden sein; ebenso können auch bei der Herstellung der langkettigen bzw. kurzkettigen Segmente Mischungen von Diolen oder Dicarbonsäuren eingesetzt werden.

Die vorstehenden Ausführungen zeigen, daß eine Vielzahl verschiedener segmentierter Co(polyetherester) als Komponente B eingesetzt werden kann. Von diesen werden Copolyetherester, deren langkettige Einheiten sich von Poly(1,4-alkylenoxid)glykol mit einem Molekulargewicht von 600 bis 2000, Terephthalsäure und 1,4-Butandiol ableiten, bevorzugt.

In einigen Fällen hat es sich als vorteilhaft erwiesen, einen Teil der Terephthalsäure durch Isophthalsäure, Adipinsäure oder Sebacinsäure oder einen Teil des 1,4-Butandiols durch andere Diole, z.B. 1,3-Propandiol, 1,5-Pentandiol oder But-2-en-1,4-diol zu ersetzen. Derartige Produkte werden in der US-A 3 651 014 und der EP-A 49 823 beschrieben.

Verfahren zur Herstellung segmentierter Co(polyetherester) sind an sich bekannt und in der Literatur beschrieben, so daß sich hier nähere Angaben erübrigen. Hier sei nur auf US-A 3 651 014, US-A 3 784 520 und einen Übersichtsartikel von G.K. Hoeschele (Chimia 28, 544 (1974) verwiesen).

Die Co(polyetherester) B können zur Stabilisierung gegen thermischen oder oxidativen Abbau Stabilisatoren enthalten, wie dies beispielsweise in den US-A 4 136 090 und 4 185 003 sowie einem Artikel von G.K. Hoeschele (Angew. Makromolekulare Chemie 58/59, 299 - 319 (1977)) zu entnehmen ist.

Neben den Komponenten A) und B) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit-und Entformungsmittel, Färbemittel wie Farbstoffe und Pigmente, faser- und pulverförmige Füll- und Verstärkungsmittel, Keimbildungsmittel, Weichmacher usw. enthalten, deren Anteil nicht mehr als 50 Gew.-%, bezogen auf das Gesamtgewicht der Formmassen beträgt.

Die Stabilisatoren können den thermoplastischen Formmassen in jedem Stadium der Herstellung zugesetzt werden, werden jedoch vorzugsweise möglichst früh zugegeben, um zu verhindern, daß die Zersetzung bereits beginnt, bevor der Stabilisator eingearbeitet ist. Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Gleit- und Entformungsmittel werden in Mengen von max. 1 Gew.-%, bezogen auf das Gesamtgewicht, der Formmasse zugesetzt. Beispiele hierfür sind Stearinsäure, Stearinalkohol und Stearinsäureamide.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer und Feldspat. Der Anteil derartiger Füll- und Farbstoffe beträgt bis zu 50 Gew.-%, bezogen auf das Gesamtgewicht der Formmassen.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Als weitere Zusatzstoffe können alle für Polyamide bekannten Flammschutzmittel zugegeben werden, insbesondere solche auf Basis von Phosphorverbindungen bzw. roter Phosphor selbst.

Die Herstellung der erfindungsgemäßen Formmassen kann nach an sich bekannten Verfahren erfolgen, z.B. durch Abmischen in der Schmelze bei erhöhten Temperaturen. Zweckmäßigerweise verwendet man hierzu Extruder, z.B. Einschnecken- oder Zweischneckenextruder oder andere herkömmliche Plastifizierungsvorrichtungen, wie Brabender-Mühlen oder Banbury-Mühlen. Die Herstellung kann aber auch durch gemeinsames Ausfällen der Komponenten aus einer Lösung oder durch Mischen oder Trockenmischen der Komponenten und anschließendes Schmelzstrangpressen des trockenen Gemisches hergestellt werden.

Die erfindungsgemäßen Formmassen eignen sich für die Verarbeitung durch Spritzguß oder Extrusion, insbesondere zur Herstellung von hochbeanspruchten, thermostabilen schlagzähen Formteilen für technische Zwecke aller Art.

Dabei ist vor allem die gute Schlagzähigkeit bei tiefen Temperaturen, verbunden mit einer guten Fließfähigkeit und einer guten Steifigkeit, von besonderem Vorteil.

### Beispiel

### Komponente A:

Polyhexamethylenadipinsäureamid mit einer rel. Viskosität (1 g/100 ml in 96 %iger H₂SO₄ bei 25°C) von 2,6 (Ultramid® A3 der BASF AG)

### Komponente B:

Hytrel® 4056 (Copolyetherester, aufgebaut im wesentlichen aus Einheiten, die sich von Poly(1,4-butylenglykol), Terephthalsäure und 1,4-Butandiol ableiten) mit einer Shore-Härte von 92 A bzw. 40 D (nach ASTM D-2240) und einem Schmelzindex von 4 bis 6,5 g/10 min (190°C, 2,16 kg Belastung) (Hersteller: DuPont de Nemours and Company)
Eine Mischung aus 98 Gew.% Ultramid® A3 und 2 Gew.% Hytrel 4056 wurde bei 280°C auf einem Zweischneckenextruder abgemischt und aufgeschmolzen und anschließend in ein Wasserbad extrudiert. Nach Granulierung und Trocknung wurden die Mischungen auf einer Spritzgußmaschine zu Rundscheiben mit einem Durchmesser von 60 mm und einer Dicke von 2 mm verspritzt und an diesen Formkörpern der Fallbolzentest durchgeführt, die Durchstoßarbeit (Schlagzähigkeit) nach DIN 53443, Teil 2 und der Elastizitätsmodul nach DIN 53457 sowie die kürzeste mögliche Zykluszeit an einem Testwerkzeug bestimmt.

Die Ergebnisse sind nachstehend aufgeführt.

| Beispiel | Fallbolzentest W₅₀ [Nm] | Durchstoßarbeit DIN 53443 [Nm] | | Elastizitätsmodul | kürzeste Zykluszeit (am Testwerkzeug) |
|---|---|---|---|---|---|
| | | 23°C | -20°C | | |
| Vergl. (100% Ultramid® A3) | 30 | 74(pV)¹) | 10(b)²) | 3000 | 39 |
| 1 | 92 | 135(pV) | 110(b) | 2800 | 26 |

| | | | | | |
|---|---|---|---|---|---|
| ¹) pV = plastische Verformung beim Durchstoß | | | | | |
| ²) b = Sprödbruch beim Durchstoß | | | | | |

Diese Ergebnisse belegen eindrucksvoll, daß die Schlagzähigkeit und die Verarbeitbarkeit von Polyamiden bereits bei Zugabe von nur 2 % eines Polyester-Elastomeren wesentlich verbessert werden.

## Patentansprüche

1. Thermoplastische Formmassen, bestehend aus
A) bis zu 99 Gew.-% eines thermoplastischen Polyamids,
B) 1 bis 2 Gew.-% eines thermoplastischen Polyester-Elastomeren,
C) 0 bis 50 Gew.-% faser- oder teilchenförmige Füllstoffe oder deren Mischungen, Stabilisatoren, Oxidationsverzögerer, Mittel gegen Wärmezersetzung und Zersetzung durch ultraviolettes Licht, Gleit- und Entformungsmittel, Färbemittel, Keimbildungsmittel, Weichmacher und Flammschutzmittel.

2. Thermoplastische Formmassen nach Anspruch 1, dadurch gekennzeichnet, daß die Komponente B aufgebaut ist aus Einheiten 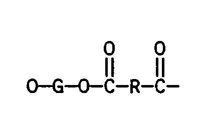 und 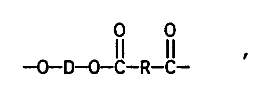 wobei
G einen zweiwertigen Rest, der nach der Entfernung der terminalen Hydroxylgruppen aus einem Poly(alkylenoxid)glykol verbleibt,
D einen zweiwertigen Rest, der nach Entfernung der terminalen Hydroxylgruppen aus einem zweiwertigen Diol verbleibt, und
R einen zweiwertigen Rest, der nach Entfernung der Carboxylgruppen aus einer Dicarbonsäure verbleibt,
darstellen.

3. Verwendung der thermoplastischen Formmassen gemäß den Ansprüchen 1 und 2 zur Herstellung von Formkörpern.

4. Formkörper, erhältlich aus thermoplastischen Formmassen gemäß den Ansprüchen 1 und 2.

## Claims

1. A thermoplastic molding material comprising
A) up to 99% by weight of a thermoplastic polyamide,
B) from 1 to 2% by weight of a thermoplastic polyester elastomer and
C) from 0 to 50% by weight of fibrous or particulate fillers or a mixture of these, stabilizers, antioxidants, heat stabilizers and UV stabilizers, lubricants and mold release agents, colorants, nucleating agents, plasticizers and flameproofing agents.

2. A thermoplastic molding material as claimed in claim 1, wherein component B consists of units 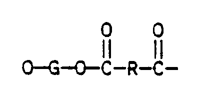 and 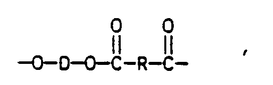 where G is a divalent radical which remains after removal of the terminal hydroxyl groups from a poly(alkylene oxide) glycol,
D is a divalent radical which remains after removal of the terminal hydroxyl groups from a divalent diol and R is a divalent radical which remains after removal of the carboxyl groups from a dicarboxylic acid.

3. The use of a thermoplastic molding material as claimed in claim 1 or 2 for producing moldings.

4. A molding obtainable from a thermoplastic molding material as claimed in claim 1 or 2.

## Revendications

1. Matières à mouler thermoplastiques, constituées de
A) jusqu'à 99% en poids d'un polyamide thermoplastique,
B) 1 à 2% en poids d'un élastomère de polyester thermoplastique,
C) 0 à 50% en poids de charges fibreuses ou particulaires, ou de leurs mélanges, d'agents de stabilisation, de retardateurs d'oxydation, d'agents contre la dégradation thermique et contre la dégradation par la lumière ultraviolette, des lubrifiants et des agents de démoulage, des colorants, des agents de nucléation, des plastifiants et des agents ignifugeants.

2. Matières à mouler thermoplastiques suivant la revendication 1, caractérisées en ce que le composant B est constitué d'unités 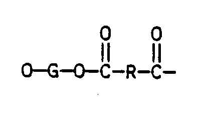 et 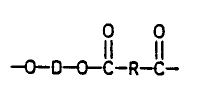 dans lesquelles
G représente un radical bivalent qui subsiste après l'élimination des radicaux hydroxyle terminaux d'un poly(oxyde d'alkylène)glycol,
D représente un radical bivalent, qui subsiste après l'élimination des radicaux hydroxyle terminaux d'un diol dihydroxylé et
R représente un radical bivalent qui subsiste après l'élimination des radicaux carboxyle d'un acide dicarboxylique.

3. Utilisation des matières à mouler thermoplastiques selon les revendications 1 et 2, en vue de la fabrication d'articles ou corps moulés.

4. Articles ou corps moulés, que l'on peut obtenir à partir des matières à mouler thermoplastiques selon les revendications 1 et 2.
